# EUROPÄISCHE PATENTSCHRIFT

(11) **EP 1 848 078 B1**
(45) Veröffentlichungstag und Bekanntmachung des Hinweises auf die Patenterteilung: **21.12.2011**
(21) Anmeldenummer: 07006936.4
(22) Anmeldetag: 03.04.2007
(51) Int. Cl.: H02G 3/04

(54) **Oberteilerdung für einen Kabelkanal**
Earthing of the upper part of a cable duct
Mise à la terre de la partie supérieure pour une goulotte

(30) Priorität: 21.04.2006 DE 202006006418 U
(43) Veröffentlichungstag der Anmeldung: 24.10.2007
(73) Patentinhaber: Tehalit GmbH, 67716 Heltersberg (DE)
(72) Erfinder: Pfeifer, Christoph, 67707 Schopp (DE); Arnold, Hans-Joachim, 67706 Krickenbach (DE)
(74) Vertreter: Patentanwälte Bitterich, Dr. Keller, Schwertfeger

(56) Entgegenhaltungen:
- EP-A1- 0 518 404
- DE-U1- 20 010 253
- US-A1- 2002 050 374

## Beschreibung

Die vorliegende Erfindung betrifft einen Kabelkanal mit einer Oberteilerdung gemäß dem Oberbegriff des Anspruchs 1.

Leitungsführungskanäle sind weltweit in großen Stückzahlen seit langer Zeit in Gebrauch.

Bei Kabelkanälen aus Metall ist es erforderlich, Potentialausgleichsverbindungen zwischen dem Deckel und dem Unterteil sicherzustellen, um eine Erdung zu gewährleisten. Dies wird beispielsweise mittels Erdungsfahnen erreicht, die aus dem Blech der Kabelkanäle selbst hergestellt sind. Hierzu wird ein dreiseitiger Freischnitt ausgeführt und die so gebildete Fahne soweit abgebogen, dass ein Steckverbinder aufgeschoben werden kann. Dadurch ist der Deckel mit dem Unterteil elektrisch verbunden. Solche Erdungsfahnen sind beispielsweise in der DE 40 36 249 A oder DE 92 13 231.6 U1 beschrieben. Die Verwendung von Steckverbindungen ist allerdings nachteilig, da der Montageaufwand groß ist und das Aufsetzen der Steckverbinder auf die Erdungsfahnen bei der Montage oft vergessen wird.

Kabelkanäle sind üblicherweise lackiert oder pulverbeschichtet, um den Anforderungen des Korrosionsschutzes und der Ästhetik zu genügen. Die Beschichtung erfolgt mit einem Pulver, das zunächst elektrostatisch aufgetragen und dann eingebrannt wird. Zur Erdung sind daher umfangreichere Maßnahmen erforderlich, um den Potentialausgleich zwischen Oberteil und Unterteil sicherzustellen. Die Erdungsanschlüsse werden meist gesondert hergestellt und werksseitig mit den Kanälen verbunden. Auch müssen die Potentialausgleichsleitungen getrennt hergestellt und auf der Baustelle montiert werden.

Das Dokument EP 0 518 404 A1 beschreibt eine Oberteilerdung für einen Kabelkanal, umfassend:
- seitliche aus einem U-förmigen Unterteil eines metallenen Kabelkanals ausgebildete Taschen mit U-Profil, bestehend aus einem Seitenwandprofil, einem verwinkelt dazu verlaufenden Steg und Z-förmig profilierten Schenkelabschnitten (22.1, 22.2), die einen Vorsprung (26) bilden,
- seitliche aus einem U-förmigen Oberteil eines metallenen Kabelkanals verwinkelte Schenkel, wobei die Schenkel aus einem ersten und zweiten Schenkelabschnitt bestehen, so dass ein Vorsprung entsteht,
- eine aus dem Schenkel heraustretende, nach innen gerichtete Erdungsfahne, wobei
- der Steg der Tasche mit dem zweiten Schenkelabschnitt des Schenkels einen ersten Kontaktbereich bildet,
- die Erdungsfahne mit dem Seitenwandprofil der Tasche einen zweiten Kontaktbereich bildet,
- die Vorsprünge des Schenkels bzw. der Tasche ineinander einrastbar sind.

Das Dokument DE 299 09 364 zeigt lediglich den Deckel für einen Kabelkanal, wobei der Deckel nach innen greifende Erdungslappen aufweist.

Diese Lösungen haben jedoch den Nachteil, dass die scharfe Kante des Abschnittes oder Lappens tief genug durch den Lack in das Metall greifen muss, um die erforderlichen Leitwerte zu erreichen. Dies ist insbesondere bei verschiedenen Lackstärken und - zusammensetzungen nicht immer ganz einfach. Außerdem besteht bei den scharfen Kanten eine Verletzungsgefahr für den Installateur.

In DE 200 10 253 U1 wird eine Erdungsmöglichkeit beschrieben, bei der bestimmte Flächenbereiche des Deckels und des Unterteils frei von Beschichtungsmaterial sind, so dass eine Kontaktierung und Erdung über die nicht lackierten Stellen erfolgen kann. Diese Konstruktion hat allerdings den Nachteil, dass bei der leichtesten Verformung des Unterteils oder Deckels die Gefahr besteht, dass die Kontaktflächen nicht mehr schlüssig aufeinanderliegen und kein ausreichender Potentialausgleich stattfinden kann.

Es ist daher Aufgabe der vorliegenden Erfindung eine Oberteilerdung für einen lackierten Kabelkanal aus Metall vorzuschlagen, bei dem bereits beim Aufsetzen des Oberteils auf das Unterteil eine sichere Erdungsfunktion des Kabelkanals gewährleistet wird, ohne dass Hilfsteile wie Leitungen und Steckverbinder oder Installationsarbeiten erforderlich sind.

Diese Aufgabe wird gelöst durch einen Kabelkanal mit einer Oberteilerdung aus Metall mit Merkmalen des Anspruchs 1.

Die erfindungsgemäße Oberteilerdung besteht aus Erdungskontakten, die durch seitlich ausgebildete Verschlussprofile des Unterteils bzw. Oberteils eines Kabelkanals gebildet werden.

Das Verschlussprofil am Unterteil besteht aus zwei seitlichen U-förmig ausgebildeten Taschen, in denen die seitlich ausgeformte Schenkel des Oberteils einrastbar sind. Die Taschen bestehen aus einem Seitenwandprofil, einem Steg und einem Z-förmig profilierten Schenkel. Der Steg bildet den Taschenboden und dient als Kontakt- und Auflagefläche für die Schenkel des Oberteils.

Die Schenkel des Oberteils besitzen ebenfalls eine Z-förmige Ausgestaltung und zumindest eine um etwa 30° aus dem Blech herausgebogene Erdungsfahne. Die Erdungsfahne wird vorzugsweise aus einem etwa dreiseitigen Freischnitt gebildet.

Beim Einsetzen des Oberteils entsteht über verschiedene Kontaktbereiche eine elektrische Kontaktierung, so dass ein elektrischer Potentialausgleich zwischen dem Oberteil und dem Unterteil möglich ist.

Der erste Kontaktbereich wird über die aus dem Schenkel des Oberteils nach außen herausgebogene Erdungsfahne gebildet, die gegen das Seitenwandprofil der Tasche des Unterteils drückt. Der zweite Kontaktbereich entsteht über Vorsprünge der Z-förmigen Profilierung der Taschen und Schenkel. Der dritte Kontaktbereich befindet sich an der Schenkelspitze des Oberteils und dem Steg des Unterteils.

Die einzelnen Kontaktbereiche sind frei von Beschichtungsmaterial, insbesondere einer Pulverbeschichtung wie sie normalerweise zur Lackierung von Kabelkanälen eingesetzt wird. Eine solche Pulverbeschichtung verhindert die elektrische Kontaktierung zwischen den zu verbindenden Metallelementen, so dass keine ausreichender Potentialausgleich erfolgen kann. In den Kontaktbereichen ist daher kein Beschichtungsmaterial aufgetragen. Vorzugsweise sind der gesamte Schenkelbereich des Oberteils und Taschenbereich des Unterteils nicht beschichtet. Der Kabelkanal selbst besteht aus Stahlblech oder Aluminium.

Die beidseitigen Schenkel des Deckels und die Schenkelprofile der Taschen sind Z-förmig profiliert, so dass beim Einsetzen des Oberteils in das Unterteil eine Rastverbindung erzeugt wird. Hierdurch werden das Unterteil und das Oberteil seitlich zusammengepresst. Das Oberteil schließt schlüssig mit den Oberflächenprofilen des Unterteils ab.

Durch den erfindungsgemäßen Aufbau der Oberteilerdung aus Verschlussprofilen des Unterteils und Oberteils werden hervorragende Leitwerte für den Potentialausgleich erreicht. Dadurch, dass sich die Erdungsfahne zwischen Schenkel des Oberteils und Seitenwandprofil des Unterteils befindet, ist sie nach außen hin geschützt, so dass der Installateur keinerlei Verletzungsgefahr ausgesetzt ist. Ferner sind keine Hilfsmittel oder Installationsarbeiten durch einen Elektroinstallateur notwendig, welche in der Praxis oftmals vergessen werden und damit ein großes Sicherheitsrisiko darstellen können.

In einer vorteilhaften Weiterbildung der Erfindung ist die vorspringende Erdungsfahne mit einer scharfen Kante versehen, so dass sie in das Material des Oberteils hineinschneidet.

Anhand der Zeichnungen soll die Erfindung in Form von Ausführungsbeispielen näher erläutert werden. Es zeigen jeweils rein schematisch
- Fig. 1: ein Profil eines Kabelkanals mit seitlichen Verschlussprofilen zur Oberteilerdung (Fig. 1 A) sowie eine Ausschnittsvergrößerung der Verschlussprofile (Fig. 1 B).
- Fig. 2: einen Schenkel eines Oberteils mit Erdungsfahne (Fig. 2 A) und eine Ausgestaltung der Tasche eines Unterteils (Fig. 2 B).
- Fig. 3: ein Oberteil mit einer durch Freischnitt nach außen herausgebogenen Erdungsfahne.
- Fig. 4: einen Kabelkanal mit Oberteil und Unterteil in zwei Montagestufen (Fig. 4A und 4B).

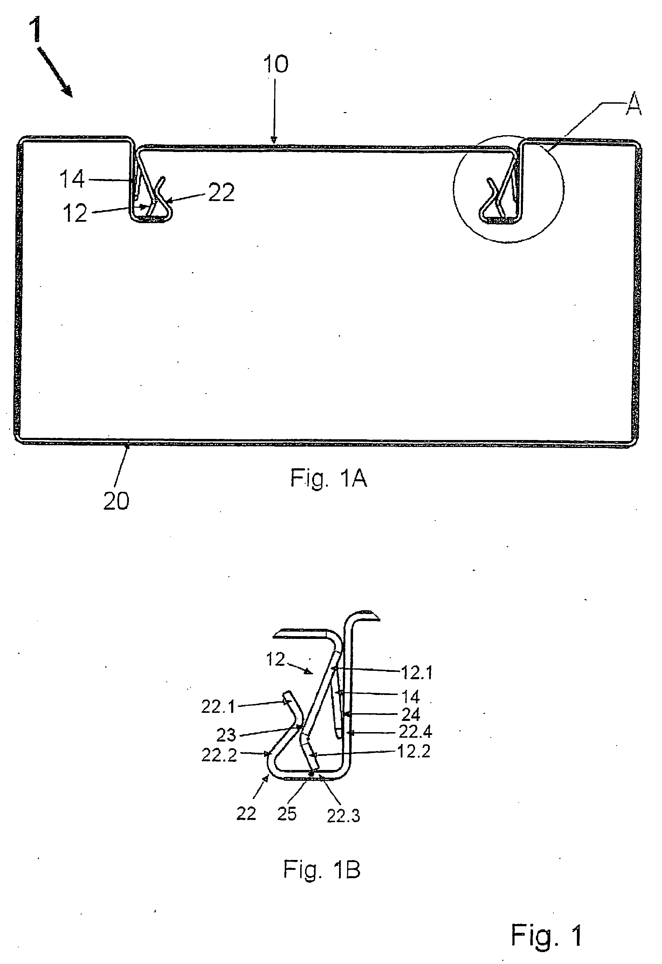

In Fig. 1A erkennt man einen Kabelkanal 1 mit den seitlichen Verschlussprofilen 12, 22 zur Oberteilerdung. Der Kabelkanal 1 besteht aus einem Unterteil 20 und einem darin eingerasteten Oberteil 10. Das Unterteil 20 besitzt seitlich ausgeformte Z-förmig profilierte Taschen 22 zur Aufnahme von zweiseitig Z-förmig ausgestaltete Schenkel 12 des Oberteils 10. Aus den Schenkeln 12 des Oberteils 10 sind Erdungsfahnen 14 durch Freischnitt herausgebogen, welche an das Seitenwandprofil der Tasche 22 des Unterteils 20 drücken. Der Buchstabe A kennzeichnet die in Fig. 1B gezeigte Ausschnittsvergrößerung des Verschlussprofils.

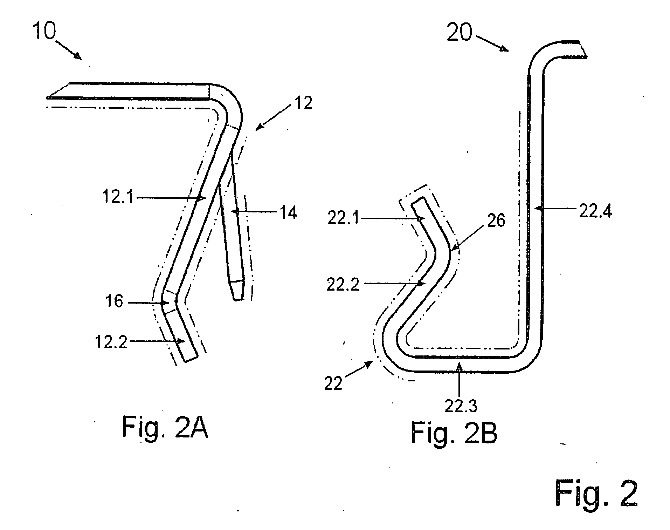

In Fig. 1B ist eine Ausschnittsvergrößerung A der Oberteilerdung aus Fig. 1A dargestellt. Man erkennt die einzelnen Konturen der Z-förmig profilierten Tasche 22 bestehend aus einem nach unten verlaufenden Seitenwandprofil 22.4, einem dazu um etwa 90° verwinkelt verlaufenden Steg 22.3, und einem Z-förmig ausgestalteten Schenkelprofil mit den beiden Schenkelelementen 22.1, 22.2. Die beiden Schenkelelemente 22.1, 22.2 bilden durch ihre Z-förmige Profilierung einen Vorsprung 26 (siehe Figur 2 B).

Der Schenkel 12 besteht aus einem leicht in das Innere des Kabelkanals geneigten ersten Schenkelabschnitt 12.1 und einem dazu verwinkelt nach außen geneigten zweiten Schenkelabschnitt 12.2. Durch den verwinkelten Verlauf der beiden Schenkelabschnitte 12.1, 12.2 entsteht ein Vorsprung 16 (siehe Figur 2A), der für eine Rastverbindung unter den Vorsprung 26 des Schenkelprofils 22.1, 22.2 der Tasche 22 einrastbar ist. An den Vorsprüngen 16, 26 berühren sich der Schenkel 12 und die Tasche 22 wodurch ein erster Kontaktbereich 23 für einen Potentialausgleich entsteht.

An dem ersten Schenkelabschnitt 12.1 des Schenkels 12 ist durch Freischnitt eine Erdungsfahne 14 ausgeformt. Die Erdungsfahne 14 wird gegen das Seitenwandprofil 22.4 der Tasche 22 gedrückt. Dadurch entsteht ein zweiter Kontaktbereich 24.

Ein dritter Kontaktbereich 25 entsteht durch die Berührung des zweiten Schenkelabschnittes 12.2 des Schenkels 12 mit dem Steg 22.3 der Tasche 22.

In Fig. 2A erkennt man den Schenkel 12 des Oberteils 10 mit seinen beiden Schenkelabschnitten 12.1, 12.2. Der erste Schenkelabschnitt 12.1 ist leicht in das Innere des Kabelkanals 1 geneigt. Der zweite Schenkelabschnitt 12.2 verläuft verwinkelt nach außen. Beide Schenkelabschnitte 12.1, 12.2 bilden ein Z-Profil mit dem Vorsprung 16. Weiter erkennt man die Erdungsfahne 14. Die Konturen, die bevorzugt lackfrei gehalten werden sind anhand einer gestrichelten Markierung angedeutet. Vorzugsweise wird der gesamte markierte Bereich lackfrei gehalten.

In Fig. 2B erkennt man die Tasche 22 des Unterteils 20. Man erkennt das nach unten ausgeformte Seitenwandprofil 22.4, den verwinkelt verlaufenden Steg 22.3 und die beiden Schenkelelemente 22.1, 22.2. Durch die Z-förmige Ausgestaltung der Schenkelelemente 22.1, 22.2 entsteht der Vorsprung 26. Die Vorsprünge 16, 26 bewirken die Rastverbindung und elektrische Kontaktierung.

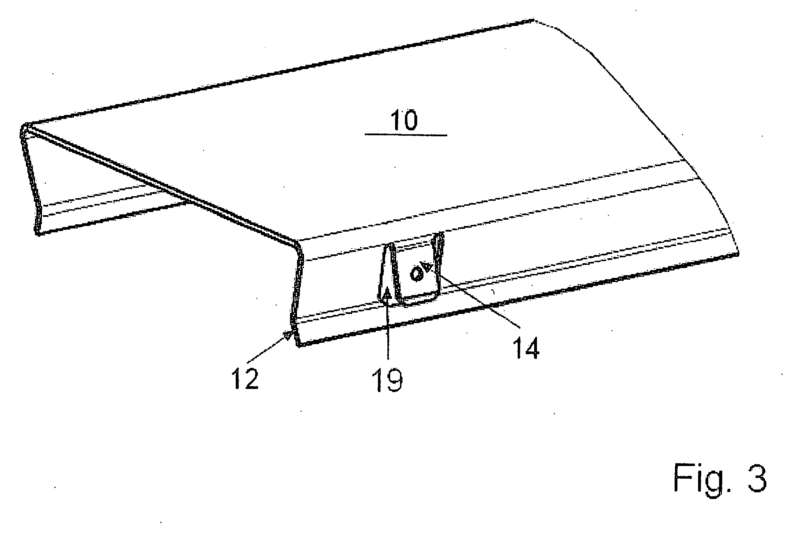

In Fig. 3 erkennt man das Oberteil 10 mit den beiden seitlichen, abgeschrägten Schenkel 12. Man erkennt die durch einen dreiseitigen Freischnitt hergestellte und nach außen um etwa 30° herausstehende Erdungsfahne 14. Im Bereich des Freischnittes entsteht eine Öffnung 19.

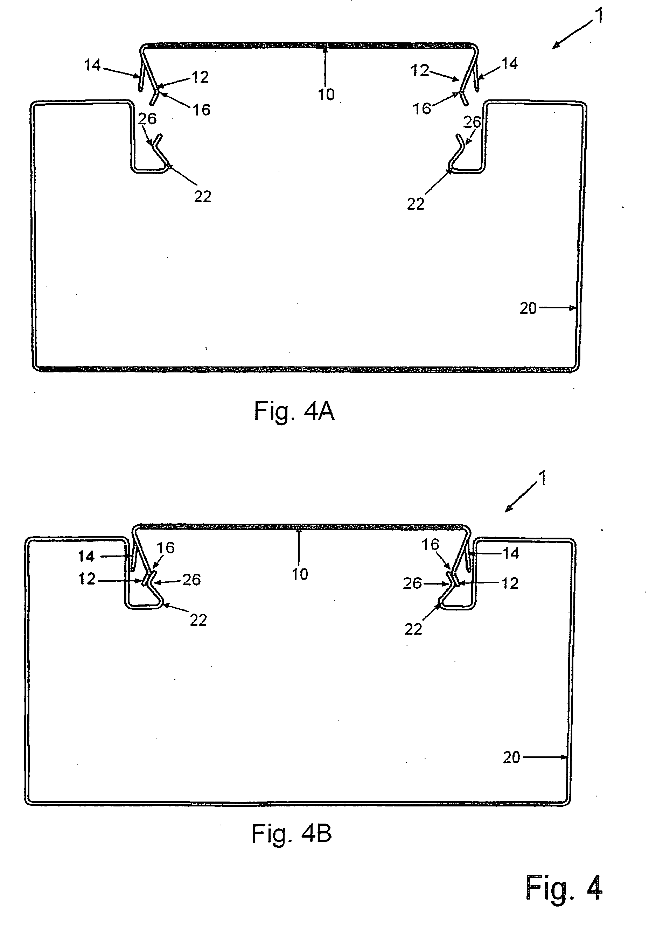

In Fig. 4A erkennt man einen Kabelkanal 1 bei dem das Oberteil 10 und das Unterteil 20 getrennt sind. Man erkennt die seitlichen Verschlusskonturen mit den profilierten Schenkeln 12, den Erdungsfahnen 14 sowie die Taschen 22 mit dem Z-förmig profilierten Schenkelprofil (22.1, 22.2).

In Fig. 4B ist das Schenkelprofil des Oberteils 10 auf die Verschlusskontur des Unterteils 20 aufgesetzt, aber noch nicht eingerastet. Zum Einrasten wird das Oberteil 10 vollständig von oben in die Taschen 22 des Unterteils 20 gedrückt.

Dadurch verrasten die Vorsprünge 16 des Schenkels 12 mit den Vorsprüngen 26 des Schenkelprofils (22.1, 22.2) der Tasche 22. Über die einzelnen lackfrei gehaltenen Kontaktbereiche ist ein elektrischer Potentialausgleich zwischen Oberteil und Unterteil des Kabelkanals möglich.

## Patentansprüche

1. Kabelkanal mit Oberteilerdung, umfassend:
- ein U-förmiges Oberteil (10) und ein U-förmiges Unterteil (20) aus Metall,
- seitliche aus dem U-förmigen Unterteil (20) ausgebildete Taschen (22) mit U-Profil bestehend aus einem Seitenwandprofil (22.4) und einem verwinkelt dazu verlaufenden Steg (22.3),
- seitliche aus dem U-förmigen Oberteil (10) verwinkelte Schenkel (12),
- eine aus dem Schenkel (12) heraustretende nach außen gerichtete Erdungsfahne (14),
wobei:
- das Oberteil (10) und/oder das Unterteil (20) des Kabelkanals (1) mit einem Beschichtungsmaterial, insbesondere einer Pulverbeschichtung versehen ist/sind,
- der Steg (22.3) der Tasche (22) mit dem zweiten Schenkelabschnitt (12.2) des Schenkels (12) einen ersten Kontaktbereich (25) bildet,
- die Erdungsfahne (14) mit dem Seitenwandprofil (22.4) der Tasche (22) einen zweiten Kontaktbereich (24) bildet,
- die Taschen (22) des Unterteils (20) aus Z-förmig profilierten Schenkelabschnitten (22.1, 22.2) bestehen, die einen Vorsprung (26) bilden,
**gekennzeichnet durch die Merkmale:**
- die Schenkel (12) des Oberteils (10) bestehen aus einem ersten und zweiten Schenkelabschnitt (12.1, 12.2), die Z-förmig profiliert sind und einen Vorsprung (16) bilden,
- die Vorsprünge (16, 26) des Schenkels (12) bzw. der Tasche (22) sind ineinander einrastbar und bilden einen dritten Kontaktbereich (23), wobei zumindest einer der drei Kontaktbereiche (23, 24, 25) frei von Beschichtungsmaterial ist.

2. Kabelkanal nach Anspruch 1, **gekennzeichnet durch** die Merkmale:
- die Erdungsfahne (14) ist aus dem ersten Schenkelabschnitt (12.1) dreiseitig freigeschnitten und
- mit einem Winkel von etwa 30° nach außen gebogen.

3. Kabelkanal nach einem der Ansprüche 1 oder 2, **gekennzeichnet durch** das Merkmal:
- alle drei Kontaktbereiche (23, 24, 25) sind frei von Beschichtungsmaterial.

4. Kabelkanal nach einem der Ansprüche 1 bis 3, **gekennzeichnet durch** das Merkmal:
- an dem Freischnitt der Erdungsfahne (14) befindet sich eine Öffnung (19).

5. Kabelkanal nach einem der Ansprüche 1 bis 4, **gekennzeichnet durch** das Merkmal:
- das Unterteil (20) und das Oberteil (10) des Kabelkanals (1) bestehen aus Aluminium oder Stahlblech.

6. Kabelkanal nach einem der Ansprüche 1 bis 5, **gekennzeichnet durch** das Merkmal:
- die Erdungsfahnen (14) sind in unregelmäßigen Abständen am Oberteil (10) angeordnet.

## Claims

1. A cable duct with upper part earthing, comprising
- a U-shaped upper part (10) and a U-shaped underpart (20) made of metal,
- U-section pockets (22) formed laterally from the U-shaped underpart (20) and comprising a side-wall profile (22.4) and a web (22.3) extending at an angle thereto,
- arms (12) angled laterally from the U-shaped upper part (10),
- an outwardly directed earthing lug (14) projecting from the arm (12),
wherein:
- the upper part (10) and/or the underpart (20) of the cable duct (1) is/are provided with a coating material, in particular a powder coating,
- the web (22.3) of the pocket (22) forms a first contact zone (25) with the second arm portion (12.1) of the arm (12),
- the earthing lug (14) forms a second contact zone (24) with the side wall profile (22.4) of the pocket (22),
- the pockets (22) of the underpart (20) comprise Z-shaped profiled arm portions (22.1,22.2) which form a projection (26),
**characterised by the features:**
- the arms (12) of the upper part (10) comprise a first and second arm portion (12.1,12.2), which are of Z-shaped profile and form a projection (16),
- the projections (16,26) of the arm (12) and the pocket (22) respectively are engageable in one another and form a third contact zone (23),
wherein at least one of the three contact zones (23,24,25) is free of coating material.

2. A cable duct according to Claim 1, **characterised by** the features:
- the earthing lug (14) is cut free on three sides from the first arm portion (12.1) and
- bent outwards at an angle of approximately 30°.

3. A cable duct according to either of Claims 1 or 2, **characterised by** the feature:
- all three contact zones (23,24,25) are free of coating material.

4. A cable duct according to any one of Claims 1 to 3,
**characterised by** the feature:
- an opening (19) is situated at the cut-free portion of the earthing lug (14).

5. A cable duct according to any one of Claims 1 to 4, **characterised by** the feature:
- the underpart (20) and the upper part (10) of the cable duct (1) consist of aluminium or steel sheet.

6. A cable duct according to any one of Claims 1 to 5, **characterised by** the feature:
- the earthing lugs (14) are arranged at irregular distances apart on the upper part (10).

## Revendications

1. Canalisation de câblage munie d'une partie supérieure mise à la terre, comprenant :
- une partie supérieure (10) configurée en U et une partie inférieure (20) configurée en U, constituées d'un métal,
- des cavités latérales (22) faisant corps avec ladite partie inférieure (20) configurée en U, et pourvues d'un profilage en U comprenant un profil de paroi latérale (22.4) et une membrure (22.3) présentant un tracé coudé par rapport à ce dernier,
- des branches latérales (12), coudées au-delà de ladite partie supérieure (10) configurée en U,
- une languette (14) de raccordement à la terre, dirigée vers l'extérieur et dépassant de la branche (12),
sachant que :
- la partie supérieure (10) et/ou la partie inférieure (20) de la canalisation de câblage (1) est/sont dotée(s) d'un matériau de revêtement, en particulier d'un revêtement à la poudre,
- la membrure (22.3) de la cavité (22) forme une première zone de contact (25) avec le second tronçon (12.2) de la branche (12),
- la languette (14) de raccordement à la terre forme une deuxième zone de contact (24) avec le profil de paroi latérale (22.4) de ladite cavité (22),
- les cavités (22) de ladite partie inférieure (20) sont constituées par des segments de branches (22.1, 22.2) à profilage en Z, formant un mentonnet (26),
**caractérisée par** les caractéristiques suivantes :
- les branches (12) de la partie supérieure (10) comprennent des premier et second tronçons (12.1, 12.2) à profilage en Z, formant un mentonnet (16),
- les mentonnets respectifs (16, 26) de la branche (12), ou de la cavité (22), peuvent être crantés l'un dans l'autre et forment une troisième zone de contact (23), au moins l'une des trois zones de contact (23, 24, 25) étant exempte de matériau de revêtement.

2. Canalisation de câblage selon la revendication 1, **caractérisée par** les caractéristiques suivantes :
- la languette (14) de raccordement à la terre est découpée sur trois côtés à partir du premier tronçon (12.1) de la branche, et
- est coudée vers l'extérieur suivant un angle d'environ 30°.

3. Canalisation de câblage selon la revendication 1 ou 2, **caractérisée par** la caractéristique suivante :
- les zones de contact (23, 24, 25) sont, toutes trois, exemptes de matériau de revêtement.

4. Canalisation de câblage selon l'une des revendications 1 à 3, **caractérisée par** la caractéristique suivante :
- une ouverture (19) se trouve au niveau de la découpe de la languette (14) de raccordement à la terre.

5. Canalisation de câblage selon l'une des revendications 1 à 4, **caractérisée par** la caractéristique suivante :
- la partie inférieure (20) et la partie supérieure (10) de ladite canalisation de câblage (1) sont constituées d'aluminium ou d'une tôle d'acier.

6. Canalisation de câblage selon l'une des revendications 1 à 5, **caractérisée par** la caractéristique suivante :
- les languettes (14) de raccordement à la terre sont disposées à des distances irrégulières sur la partie supérieure (10).
